# EUROPÄISCHE PATENTANMELDUNG

(11) **EP 4 575 387 A1**
(43) Veröffentlichungstag der Anmeldung: **25.06.2025**
(21) Anmeldenummer: 23219690.7
(22) Anmeldetag: 22.12.2023
(51) Int. Cl.: G01B 11/245, G01B 11/25, G01N 21/892, G01N 21/952, B21B 38/00, B21C 47/34

(54) **ERFASSEN EINER OBERFLÄCHENSTRUKTUR EINES MESSOBJEKTS UND TREIBER FÜR EIN WALZWERK**

(71) Anmelder: Primetals Technologies Austria GmbH, 4031 Linz (AT)
(72) Erfinder: Banzirsch, Manuel, 4040 Linz (AT); Mittlböck, Simon, 4040 Linz (AT); Ostheimer, Pascal, 4020 Linz (AT); Simon, Ezequiel, 4040 Linz (AT); Pichler, Lukas, 4040 Linz (AT)
(74) Vertreter: Metals@Linz

(57) **Zusammenfassung**

Die Erfindung betrifft eine Sensoreinheit (1) zum Erfassen einer Oberflächenstruktur einer Oberfläche (3, 54, 56) eines Messobjekts (5, 53, 55). Die Sensoreinheit (1) umfasst einen Sensorträger (9) und mehrere Lasersensoren (7), die entlang einer Sensorachse (21) nebeneinander angeordnet und jeweils fest mit dem Sensorträger (9) verbunden sind. Jeder Lasersensor (7) ist als ein Laser-Linien-Triangulationssensor ausgebildet, der eingerichtet ist, ein divergentes Laserlichtbündel (23) auszugeben, das sich um eine Hauptausgaberichtung (25) des Lasersensors (7) fächerartig von dem Lasersensor (7) ausgehend weitet, auszugeben und Laserlicht (29) zu empfangen. Die Hauptausgaberichtungen (25) aller Lasersensoren (7) stimmen überein und die Laserlichtbündel (23) aller Lasersensoren (7) sind in einer Ebene konzentriert.

## Beschreibung

Die Erfindung betrifft eine Sensoreinheit zum Erfassen einer Oberflächenstruktur einer Oberfläche eines Messobjekts und ein Verfahren zum Betreiben der Sensoreinheit.

Ferner betrifft die Erfindung einen Treiber für ein zum Walzen eines Walzgutes eingerichtetes Walzwerk, das einen zum Aufwickeln des Walzgutes eingerichteten Haspel aufweist, wobei der Treiber eingerichtet ist, die Zuführung des Walzgutes zum Haspel unter Verwendung wenigstens einer das Walzgut kontaktierenden Treiberrolle zu steuern. Da die Treiberrolle das Walzgut kontaktiert, wirken sich Defekte der Oberfläche der Treiberrolle direkt auf das Walzgut aus. Derartige Defekte sind insbesondere Auftragungen auf die Oberfläche der Treiberrolle. Beispielsweise können sich prozessbedingt auf der heißen Oberfläche des Walzgutes Oxidschichten (Zunder) bilden. Kleine Zunderteile können dann an der Oberfläche der Treiberrolle anhaften und so Defekte bilden. Insbesondere führen auch Ablösungen von Seitenführungen (chips) vor dem Haspel, speziell beim Walzen von Siliziumgütern, zu Schädigungen der Treiberrolle und Auftragungen auf die Treiberrolle. Auch andere unerwünschte Prozesseffekte wie so genannte Hochgeher oder Risse des Walzgutes können die Oberfläche der Treiberrolle schädigen. Auf Grund der typisch langen Standzeiten der Treiberrolle (oft mehrere Wochen) kumulieren diese Effekte und beeinträchtigen die Oberfläche des Walzgutes, solange sie nicht entdeckt und behoben werden. Dies führt zu einer Qualitätsminderung des Walzgutes.

Gegenwärtig werden Treiberrollen in der Regel manuell durch einen Anlagenbediener in Stillstandsphasen der Produktion visuell überprüft. Derartige Überprüfungen finden in der Regel dann statt, wenn ein Oberflächenfehler der Oberfläche des Walzgutes entdeckt wird, beispielsweise durch ein Oberflächeninspektionsgerät. Zu diesem Zeitpunkt sind jedoch üblicherweise die Treiberrollen bereits beschädigt oder verschmutzt. Gegebenenfalls wird manuell auch mit einem Schleifstein (an einer langen Stange) versucht, Auftragungen zu entfernen. Dazu muss ein Anlagenbediener auf einen Rollgang steigen. Einerseits gefährdet dies die Sicherheit des Anlagenbedieners, andererseits führen wenig effektives manuelles Schleifen, geringe Inspektionsintervalle und menschliche Fehler (Übersehen von Defekten) zu einer Qualitätsminderung der Produktion.

CN 114112908 A offenbart eine Vorrichtung, welche mehrere auf einem Rahmen montierte Laserköpfe zum Abtasten einer Walzenoberfläche einer Walze zum Walzen eines Walzgutes aufweist, wobei der Rahmen entlang der zu vermessenden Walze verschoben werden kann. Die Projektionsebenen der einzelnen Laserstrahlen verlaufen jeweils normal zur Walzenachse der Walze.

EP 1 120 628 A1 offenbart eine Vorrichtung zur Messung der Kontur, der horizontalen Krümmung und/oder der horizontalen Position einer Walze eines Walzgerüsts, mit berührungslos arbeitenden Abstandssensoren, mittels denen ein Abstand zur Mantelfläche der Walze berührungsfrei messbar ist. Die Vorrichtung weist zumindest einen Messbalken auf, der parallel zur Walze in einem festen Abstand zu dieser angeordnet ist und an dem die Abstandssensoren in seiner Axialrichtung zueinander beabstandet angeordnet sind. Die Abstandssensoren sind entweder als Wirbelstromsensoren oder als optische Sensoren ausgebildet.

CN 206772226 U offenbart eine Messvorrichtung mit mehreren Laser-Linien-Triangulationssensoren und einem Kodierer (Encoder), um die Bewegung und Größe eines Messobjekts zu erfassen.

EP 3 663 017 A1 offenbart ein Überwachungsgerät zum Überwachen eines Verschleißzustands einer Strangführungsrolle einer Stranggießanlage. Das Überwachungsgerät umfasst eine Ermittlungseinheit zum Ermitteln eines oder mehrerer verschleißabhängiger Zustandsparameter der Strangführungsrolle sowie ein Anschlusselement, mittels welchem das Überwachungsgerät drehgelenkig mit einer Kaltstranggliederkette verbindbar ist.

Der Erfindung liegt die Aufgabe zugrunde, eine verbesserte Erkennung von Defekten einer Oberfläche einer Treiberrolle zu ermöglichen.

Die Aufgabe wird erfindungsgemäß durch eine Sensoreinheit mit den Merkmalen des Anspruchs 1, ein Verfahren zum Betreiben einer derartigen Sensoreinheit mit den Merkmalen des Anspruchs 9, einen Treiber mit den Merkmalen des Anspruchs 12 und ein Verfahren zum Betreiben eines derartigen Treibers mit den Merkmalen des Anspruchs 15 gelöst.

Vorteilhafte Ausgestaltungen der Erfindung sind Gegenstand der Unteransprüche.

Eine erfindungsgemäße Sensoreinheit zum Erfassen einer Oberflächenstruktur einer Oberfläche eines Messobjekts umfasst
- einen Sensorträger,
- mehrere Lasersensoren, die entlang einer Sensorachse nebeneinander angeordnet und jeweils fest mit dem Sensorträger verbunden sind, wobei
- jeder Lasersensor als ein Laser-Linien-Triangulationssensor ausgebildet ist, der eingerichtet ist, ein divergentes Laserlichtbündel, das sich um eine Hauptausgaberichtung des Lasersensors fächerartig von dem Lasersensor ausgehend weitet, auszugeben und Laserlicht zu empfangen, wobei
- die Hauptausgaberichtungen aller Lasersensoren übereinstimmen und
- die Laserlichtbündel aller Lasersensoren in einer Ebene konzentriert sind.

Die erfindungsgemäße Sensoreinheit ermöglicht eine berührungsfreie Erfassung einer Oberflächenstruktur einer Oberfläche eines Messobjekts. Dazu weist die Sensoreinheit mehrere Lasersensoren auf, die jeweils als ein Laser-Linien-Triangulationssensor ausgebildet sind. Die Lasersensoren sind nebeneinander entlang einer Sensorachse angeordnet und geben Laserlichtbündel aus, die in einer Ebene konzentriert sind und gleich ausgerichtet sind. Durch das Bestrahlen der Oberfläche des Messobjekts mit den von den Lasersensoren ausgegebenen Laserlichtbündeln kann somit von der Sensoreinheit eine Oberflächenstruktur eines Bereichs der Oberfläche des Messobjekts erfasst werden, der in der Ebene liegt, in der die Laserlichtbündel konzentriert sind, und somit im Wesentlichen eindimensional ist. Durch Drehen des Messobjekts um eine zu der Sensorachse der Sensoreinheit zumindest annähernd parallele Achse während der Messung kann die Erfassung der Oberflächenstruktur auf einen zweidimensionalen Bereich der Oberfläche des Messobjekts erweitert werden. Das Ergebnis einer derartigen Messung kann als eine zweidimensionale Datenmatrix dargestellt werden, die jeweils einem durch zwei Koordinaten spezifizierten Punkt auf der Oberfläche des Messobjekts einen Abstand von der Längsachse des Messobjekts und einen Intensitätswert für von der Oberfläche reflektiertes Laserlicht, das von der Sensoreinheit empfangen wird, zuordnet. Durch den Einsatz eines intelligenten Algorithmus lassen sich anhand der Datenmatrix beispielsweise Abweichungen im Höhenprofil der Oberfläche des Messobjekts sowie die Intensität der Reflexion analysieren, Defekte der Oberfläche erkennen und ein Verschleiß dokumentieren.

Das Messobjekt kann insbesondere eine Treiberrolle eines Treibers zum Zuführen eines Walzgutes zum Haspel in einem Walzwerk sein. Die erfindungsgemäße Sensoreinheit ermöglicht somit insbesondere das Erfassen der Oberflächenstruktur einer derartigen Treiberrolle und somit das Erkennen von Defekten der Oberfläche der Treiberrolle.

Bei einer Ausgestaltung der erfindungsgemäßen Sensoreinheit weist der Sensorträger ein Gehäuse auf, das alle Lasersensoren umgibt. Durch das Gehäuse können die Lasersensoren vor widrigen Umgebungseinflüssen geschützt werden. Dies ist insbesondere vorteilhaft, wenn das Messobjekt eine Treiberrolle ist, da in der Umgebung einer Treiberrolle insbesondere beim Führen von Walzgut durch den die Treiberrolle aufweisenden Treiber sehr raue Bedingungen herrschen.

Bei einer weiteren Ausgestaltung der erfindungsgemäßen Sensoreinheit weist das Gehäuse für jeden Lasersensor ein Sichtfenster auf, durch das Licht von dem Lasersensor ausgegeben und empfangen werden kann. Die Sichtfenster können beispielsweise jeweils eine Glasplatte aufweisen, um die Lasersensoren zu schützen. Ferner kann das Gehäuse statt eines Sichtfensters für jeden Lasersensor ein Sichtfenster für alle Lasersensoren aufweisen, das ebenfalls eine Glasplatte aufweisen kann.

Eine weitere Ausgestaltung der erfindungsgemäßen Sensoreinheit weist eine Druckerzeugungsvorrichtung auf, die eingerichtet ist, in dem Gehäuse einen Überdruck zu erzeugen. Diese Ausgestaltung der Erfindung ermöglicht, das Eintreten von Partikeln, Feuchtigkeit und Dampf in das Gehäuse durch den Überdruck zu verhindern beziehungsweise zu reduzieren. Zusätzlich wird dadurch das Risiko einer Kondenswasserbildung an den Lasersensoren reduziert.

Eine weitere Ausgestaltung der erfindungsgemäßen Sensoreinheit weist ein Kühlsystem auf, das zum Kühlen der Lasersensoren eingerichtet ist. Dadurch kann vorteilhaft eine Überhitzung der Lasersensoren verhindert werden.

Bei einer weiteren Ausgestaltung der erfindungsgemäßen Sensoreinheit weist das Kühlsystem für jeden Lasersensor wenigstens einen Kühlkörper auf, der mit dem Lasersensor in Kontakt steht und zum Durchleiten einer Kühlflüssigkeit ausgebildet ist, und das Kühlsystem weist Kühlleitungen auf, durch die alle Kühlkörper mit der Kühlflüssigkeit versorgbar sind. Als Kühlflüssigkeit wird beispielsweise Wasser verwendet. Die Zuleitungen zu dem Kühlsystem sind beispielsweise steckbar am Sensorträger ausgeführt. Dadurch kann die Sensoreinheit bei einem Ein- und Ausbau in einfacher Weise mit den Zuleitungen verbunden beziehungsweise von den Zuleitungen getrennt werden.

Eine weitere Ausgestaltung der erfindungsgemäßen Sensoreinheit weist eine Abdeckplatte auf, die zwischen einer ersten Endstellung, in der die Abdeckplatte die Ausgabe und den Empfang von Licht durch die Lasersensoren verhindert, und einer zweiten Endstellung, in der die Abdeckplatte die Ausgabe und den Empfang von Licht durch die Lasersensoren ermöglicht, bewegbar ist. Durch die Abdeckplatte können die Lasersensoren bzw. Sichtfenster vor widrigen Umwelteinflüssen geschützt werden, wenn die Sensoreinheit nicht im Betrieb ist. Auch diese Ausgestaltung der erfindungsgemäßen Sensoreinheit ist insbesondere vorteilhaft, wenn das Messobjekt eine Treiberrolle ist. In diesem Fall können die Lasersensoren durch die Abdeckplatte insbesondere geschützt werden, wenn ein Walzgut durch den die Treiberrolle aufweisenden Treiber geführt wird.

Eine weitere Ausgestaltung der erfindungsgemäßen Sensoreinheit weist eine Steuereinheit auf, die eingerichtet ist, von den Lasersensoren empfangenes Laserlicht, das von einem Bereich der Oberfläche des Messobjekts reflektiert wird, auf den von den Lasersensoren Laserlicht ausgegeben wird, zum Erfassen der Oberflächenstruktur des Bereichs der Oberfläche des Messobjekts auszuwerten. Im Fall, dass die Sensoreinheit eine Druckerzeugungsvorrichtung, ein Kühlsystem und/oder eine Abdeckplatte aufweist, kann die Steuereinheit ferner eingerichtet sein, auch diese Komponenten der Sensoreinheit zu steuern. Ferner kann die Steuereinheit eingerichtet sein, eine Antriebseinheit zu steuern, mittels derer das Messobjekt im Betrieb der Sensoreinheit gedreht wird, um die Oberflächenstruktur eines zweidimensionalen Bereichs der Oberfläche des Messobjekts zu erfassen.

Bei dem erfindungsgemäßen Verfahren zum Betreiben einer erfindungsgemäßen Sensoreinheit wird die Sensoreinheit relativ zu dem Messobjekt derart angeordnet, dass mehrere von den Lasersensoren ausgegebene Laserlichtbündel zusammen einen zusammenhängenden Bereich der Oberfläche des Messobjekts bestrahlen. Mit der Sensoreinheit wird durch Auswerten von den Lasersensoren empfangenen Laserlichts, das von der Oberfläche des Messobjekts reflektiert wird, die Oberflächenstruktur des mit Laserlicht bestrahlten Bereichs der Oberfläche des Messobjekts erfasst. Durch die Bestrahlung eines zusammenhängenden Bereichs der Oberfläche des Messobjekts wird eine lückenlose Erfassung einer Oberflächenstruktur dieses Bereichs der Oberfläche des Messobjekts ermöglicht.

Bei einer Ausgestaltung des erfindungsgemäßen Verfahrens wird die Sensorachse der Sensoreinheit zumindest annähernd parallel zu einer Längsachse des Messobjekts ausgerichtet und das Messobjekt wird während der Ausgabe des Laserlichts auf seine Oberfläche um die Längsachse des Messobjekts mindestens einmal um 360 Grad gedreht. Die Drehung des Messobjekts um mindestens 360 Grad um seine Längsachse ermöglicht vorteilhaft eine Erfassung der Oberflächenstruktur einer gesamten Oberfläche des Messobjekts, die durch Drehen des Messobjekts um seine Längsachse der Sensoreinheit zuwendbar ist. Der Ausdruck 'zumindest annähernd parallel' bedeutet in diesem Zusammenhang, dass die Richtungen der Sensorachse und der Längsachse des Messobjekts um höchstens zwei Grad voneinander abweichen.

Bei einer weiteren Ausgestaltung des erfindungsgemäßen Verfahrens wird zum Kalibrieren der Sensoreinheit an dem Messobjekt ein Kalibrierobjekt angeordnet, das eine Oberfläche mit einer bekannten Oberflächenstruktur aufweist, von den Lasersensoren der Sensoreinheit werden Laserlichtbündel auf die Oberfläche des Kalibrierobjekts ausgegeben und die Sensoreinheit wird derart kalibriert, dass die von ihr durch Auswerten des von den Lasersensoren empfangenen Laserlichts, das von der Oberfläche des Kalibrierobjekts reflektiert wird, ermittelte Oberflächenstruktur mit der bekannten Oberflächenstruktur der Oberfläche des Kalibrierobjekts übereinstimmt. Das Kalibrieren der Sensoreinheit ist insbesondere notwendig, da sich Laserlichtbündel benachbarter Lasersensoren auf der Oberfläche des Messobjekts in der Regel überlappen, wenn mehrere Laserlichtbündel zusammen einen zusammenhängenden Bereich der Oberfläche bestrahlen.

Ein erfindungsgemäßer Treiber für ein zum Walzen eines Walzgutes eingerichtetes Walzwerk, das einen zum Aufwickeln des Walzgutes eingerichteten Haspel aufweist, ist eingerichtet, die Zuführung des Walzgutes zu dem Haspel unter Verwendung einer das Walzgut kontaktierenden Treiberrolle zu steuern. Der Treiber weist eine erfindungsgemäße Sensoreinheit auf, die eingerichtet ist, eine Oberflächenstruktur einer Oberfläche der Treiberrolle zu erfassen, wobei die Lasersensoren der Sensoreinheit eingerichtet sind, Laserlichtbündel auf eine Oberfläche der Treiberrolle auszugeben. Vorzugsweise ist die Sensorachse dabei zumindest annähernd parallel zu einer Längsachse der Treiberrolle ausgerichtet, wobei die Längsachse der Treiberrolle die Drehachse ist, um die die Treiberrolle drehbar gelagert ist. Beispielsweise weichen die Richtungen der Sensorachse und der Längsachse der Treiberrolle um höchstens zwei Grad voneinander ab.

Die Formulierung, dass der Treiber eine Treiberrolle und eine Sensoreinheit aufweist, schließt dabei nicht aus, dass der Treiber mehr als eine Treiberrolle und mehr als eine Sensoreinheit aufweist. Vielmehr ist diese Formulierung so zu verstehen, dass der Treiber wenigstens eine Treiberrolle und wenigstens eine Sensoreinheit aufweist. In der Regel weist ein Treiber tatsächlich wenigstens zwei Treiberrollen auf. In diesem Fall weist der Treiber vorzugsweise für jede Treiberrolle eine erfindungsgemäße Sensoreinheit auf, die eingerichtet ist, eine Oberflächenstruktur einer Oberfläche der Treiberrolle zu erfassen. Mit der Sensoreinheit können vorteilhaft Defekte der Oberfläche der Treiberrolle zuverlässig erkannt werden. Wenn ein Defekt erkannt wird, kann dieser beseitigt oder die Treiberrolle ausgewechselt werden.

Bei einer Ausgestaltung des erfindungsgemäßen Treibers ist die Sensoreinheit in einem Abstand von der Treiberrolle angeordnet, der es ermöglicht, dass mehrere von den Lasersensoren ausgegebene Laserlichtbündel zusammen einen zusammenhängenden Bereich der Oberfläche der Treiberrolle bestrahlen. Bei einer Drehung der Treiberrolle um wenigstens 360 Grad während einer Messung kann dadurch insbesondere die Oberflächenstruktur der gesamten Mantelfläche der Treiberrolle erfasst werden. Der Abstand der Längsachse der Treiberrolle von den Lasersensoren der Sensoreinheit wird dabei zweckmäßig als ein Kompromiss zwischen einem minimal geforderten Abstand, einer gewünschten Genauigkeit der Messung und einer Anzahl der Lasersensoren der Sensoreinheit gewählt. Mit sinkendem Abstand erhöht sich nämlich die Genauigkeit der Messung, gleichzeitig steigt jedoch auch Anzahl der Lasersensoren, die erforderlich sind, um mit ihren Laserlichtbündeln die gesamte Länge der Treiberrolle abzudecken. Ein geeigneter Abstand der Längsachse der Treiberrolle von den Lasersensoren der Sensoreinheit liegt beispielsweise in einem Bereich von 400 mm bis 450 mm. Dieser Abstand ermöglicht eine räumliche Auflösung der Oberflächenstruktur der Oberfläche der Treiberrolle von etwa 230 um in Richtung der Längsachse der Treiberrolle und von etwa 130 um senkrecht zu der Längsachse. Die Laserlichtbündel weisen auf der Oberfläche der Treiberrolle beispielsweise eine Ausdehnung im Bereich von 200 mm bis 300 mm entlang der Längsachse der Treiberrolle auf und die Laserlichtbündel je zweier benachbarter Lasersensoren überlappen sich auf der Oberfläche der Treiberrolle entlang deren Längsachse beispielsweise etwa 20 mm.

Bei einer weiteren Ausgestaltung des erfindungsgemäßen Treibers ist die Sensoreinheit ausbaubar in dem Treiber angeordnet, so dass die Sensoreinheit im Fall, dass die Treiberrolle beim Durchführen des Walzgutes durch den Treiber oberhalb des Walzgutes angeordnet ist, dem Treiber mit einer Hebevorrichtung entnehmbar ist und im Fall, dass die Treiberrolle beim Durchführen des Walzgutes durch den Treiber unterhalb des Walzgutes angeordnet ist, zum Ausbau verschiebbar in dem Treiber angeordnet ist, so dass die Sensoreinheit durch ein Verschieben aus dem Treiber herausführbar ist. Diese Ausgestaltung des erfindungsgemäßen Treibers ermöglicht vorteilhaft einen relativ einfachen Ein- und Ausbau der Sensoreinheit in beziehungsweise aus dem Treiber.

Bei dem erfindungsgemäßen Verfahren zum Betreiben eines erfindungsgemäßen Treibers wird eine Oberflächenstruktur der Oberfläche der Treiberrolle mittels der Sensoreinheit nur zu Zeiten erfasst, zu denen kein Walzgut durch den Treiber geführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Blockdiagramm eines Ausführungsbeispiels einer Sensoreinheit zum Erfassen einer Oberflächenstruktur eines Messobjekts,
FIG 2 eine Prinzipskizze der in Figur 1 gezeigten Sensoreinheit und des Messobjekts,
FIG 3 eine schematische Seitenansicht der in den Figuren 1 und 2 gezeigten Sensoreinheit und eines Teils der Oberfläche des Messobjekts,
FIG 4 ein an dem Messobjekt angeordnetes Kalibrierobjekt zum Kalibrieren der in den Figuren 1 bis 3 gezeigten Sensoreinheit,
FIG 5 das in Figur 4 gezeigte Kalibrierobjekt und dessen Anordnung an dem Messobjekt relativ zu der Sensoreinheit in einer Seitenansicht,
FIG 6 eine Schnittdarstellung eines Ausführungsbeispiels eines Treibers zum Zuführen eines Walzgutes zu einem Haspel in einem Walzwerk.

Einander entsprechende Teile sind in den Figuren mit denselben Bezugszeichen versehen.

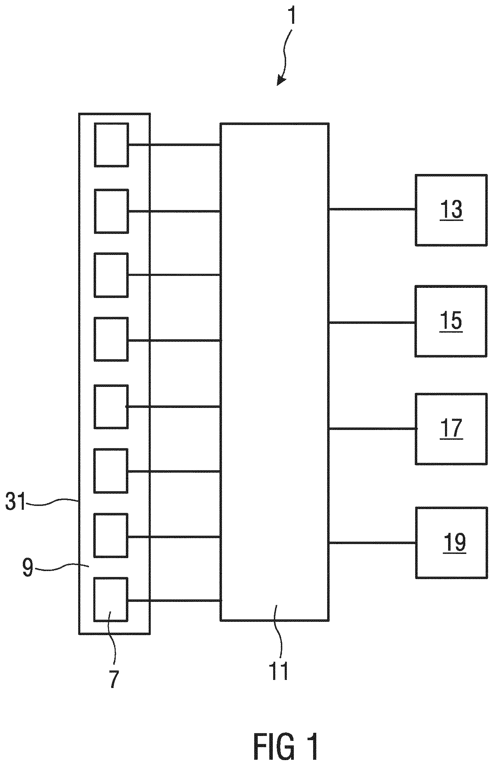

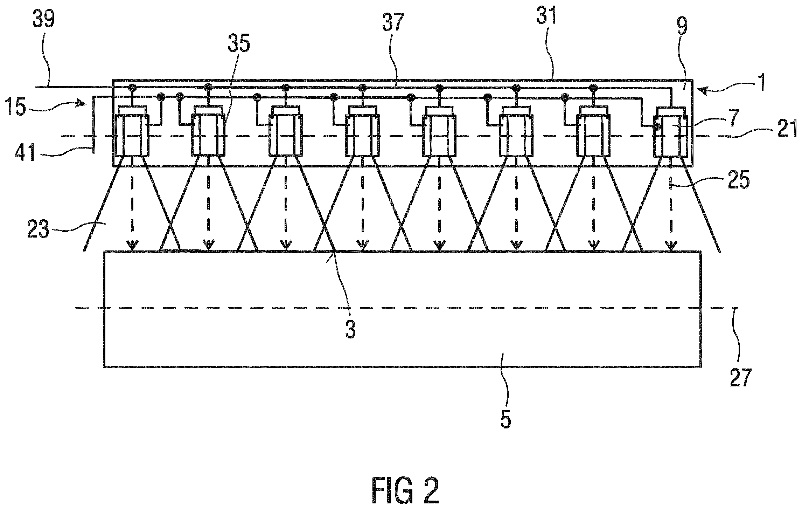

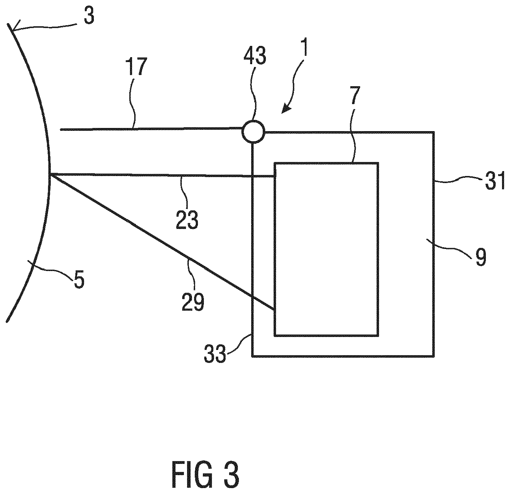

**Figur 1** (FIG 1), **Figur 2** (FIG 2) und **Figur 3** (FIG 3) zeigen ein Ausführungsbeispiel einer Sensoreinheit 1 zum Erfassen einer Oberflächenstruktur einer Oberfläche 3 eines Messobjekts 5. Dabei zeigt Figur 1 ein Blockdiagramm der Sensoreinheit 1, Figur 2 zeigt eine Prinzipskizze der Sensoreinheit 1 und des Messobjekts 5 und Figur 3 zeigt eine schematische Seitenansicht der Sensoreinheit 1 und eines Teils der Oberfläche 3 des Messobjekts 5.

Die Sensoreinheit 1 umfasst mehrere Lasersensoren 7, einen Sensorträger 9, eine Steuereinheit 11, eine Druckerzeugungsvorrichtung 13, ein Kühlsystem 15, eine Abdeckplatte 17 und eine Antriebseinheit 19.

Die Lasersensoren 7 sind entlang einer Sensorachse 21 äquidistant nebeneinander angeordnet und jeweils fest mit dem Sensorträger 9 verbunden. Beispielsweise weist der Sensorträger 9 eine Profilschiene auf, an der die Lasersensoren 7 befestigt sind. Jeder Lasersensor 7 ist als ein Laser-Linien-Triangulationssensor ausgebildet, der eingerichtet ist, ein divergentes Laserlichtbündel 23 auszugeben, das sich um eine Hauptausgaberichtung 25 des Lasersensors 7 fächerartig von dem Lasersensor 7 ausgehend weitet. Die Hauptausgaberichtungen 25 aller Lasersensoren 7 stimmen überein und die Laserlichtbündel 23 aller Lasersensoren 7 sind in einer Ebene konzentriert. Die Lasersensoren 7 geben beispielsweise jeweils rotes Laserlicht aus; dies ist insbesondere vorteilhaft, wenn sich Wassertropfen auf der Oberfläche 3 des Messobjekts 5 befinden können.

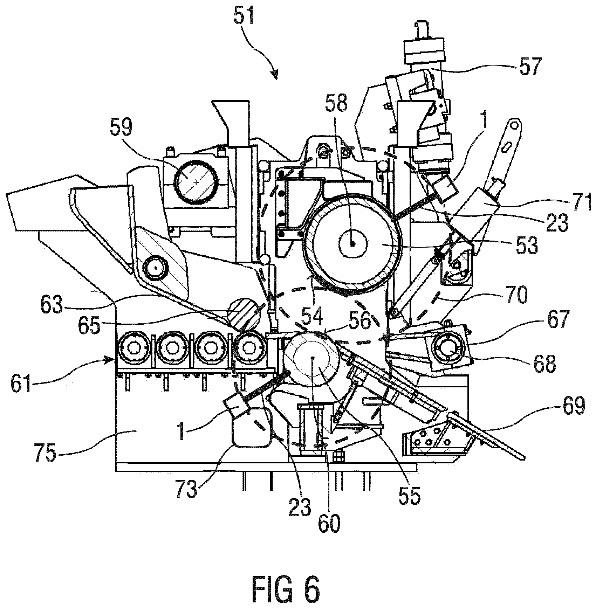

Das Messobjekt 5 ist in dem in den Figuren 2 und 3 gezeigten Beispiel zylindrisch um eine Längsachse 27 ausgebildet. Insbesondere kann das Messobjekt 5 eine Treiberrolle 53, 55 eines Treibers 51 zum Zuführen eines Walzgutes zu einem Haspel in einem Walzwerk sein, siehe dazu Figur 6 und deren Beschreibung. Die Sensoreinheit 1 ist relativ zu dem Messobjekt 5 derart angeordnet, dass die Sensorachse 21 der Sensoreinheit 1 parallel zu der Längsachse 27 des Messobjekts 5 ausgerichtet ist und die von den Lasersensoren 7 ausgegebenen Laserlichtbündel 23 zusammen einen Bereich der Oberfläche 3 des Messobjekts 5 bestrahlen, der sich über die gesamte auf die Längsachse 27 bezogene Länge des Messobjekts 5 erstreckt. Dabei überlappen sich die Laserlichtbündel 23 je zweier benachbarter Lasersensoren 7 auf der Oberfläche 3 des Messobjekts 5. Die Lasersensoren 7 sind ferner jeweils eingerichtet, von der Oberfläche 3 des Messobjekts 5 reflektiertes Laserlicht 29 zu empfangen.

Der Abstand der Längsachse 27 des Messobjekts 5 von den Lasersensoren 7 der Sensoreinheit 1 liegt dabei beispielsweise in einem Bereich von 400 mm bis 450 mm. Dieser Abstand ermöglicht eine räumliche Auflösung der Oberflächenstruktur der Oberfläche 3 des Messobjekts 5 von etwa 230 um in Richtung der Längsachse 27 des Messobjekts 5 und von etwa 130 um senkrecht zu der Längsachse 27. Die Laserlichtbündel 23 weisen auf der Oberfläche 3 des Messobjekts 5 beispielsweise eine Ausdehnung im Bereich von 200 mm bis 300 mm entlang der Längsachse 27 des Messobjekts 5 auf und die Laserlichtbündel 23 je zweier benachbarter Lasersensoren 7 überlappen sich auf der Oberfläche 3 des Messobjekts 5 entlang der Längsachse 27 des Messobjekts 5 beispielsweise etwa 20 mm.

Der Sensorträger 9 weist ein Gehäuse 31 auf, das alle Lasersensoren 7 umgibt. Das Gehäuse 31 weist für jeden Lasersensor 7 ein Sichtfenster 33 auf, durch das Licht von dem Lasersensor 7 ausgegeben und empfangen werden kann. Die Sichtfenster 33 können beispielsweise jeweils eine Glasplatte aufweisen. Ferner kann das Gehäuse 31 statt eines Sichtfensters 33 für jeden Lasersensor 7 ein Sichtfenster 33 für alle Lasersensoren 7 aufweisen, das ebenfalls eine Glasplatte aufweisen kann.

Die Druckerzeugungsvorrichtung 13 ist eingerichtet, in dem Gehäuse 31 einen Überdruck zu erzeugen.

Das Kühlsystem 15 ist zum Kühlen der Lasersensoren 7 eingerichtet. Zu diesem Zweck weist das Kühlsystem 15 für jeden Lasersensor 7 zwei plattenartig ausgebildete Kühlkörper 35 auf, die jeweils mit dem Lasersensor 7 in Kontakt stehen und auf sich gegenüberliegenden Seiten des Lasersensors 7 angeordnet und jeweils zum Durchleiten einer Kühlflüssigkeit ausgebildet sind. Das Kühlsystem 15 weist Kühlleitungen 37 auf, durch die alle Kühlkörper 35 mit der Kühlflüssigkeit versorgbar sind und die mit einem Zulauf 39 und mit einem Ablauf 41 für die Kühlflüssigkeit verbunden sind.

Die Abdeckplatte 17 ist zwischen einer ersten Endstellung, in der sie die Ausgabe und den Empfang von Licht durch die Lasersensoren 7 verhindert, und einer in Figur 3 gezeigten zweiten Endstellung, in der sie die Ausgabe und den Empfang von Licht durch die Lasersensoren 7 ermöglicht, bewegbar. Im in Figur 3 gezeigten Ausführungsbeispiel ist die Abdeckplatte 17 um eine Schwenkachse 43 schwenkbar gelagert. In anderen Ausführungsbeispielen kann die Abdeckplatte 17 jedoch auch anders, beispielsweise zwischen den beiden Endstellungen verschiebbar oder drehbar, ausgeführt sein.

Die Antriebseinheit 19 ist eingerichtet, das Messobjekt 5 um seine Längsachse 27 zu drehen.

Die Steuereinheit 11 ist eingerichtet, die Ausgabe von Laserlicht 23 durch die Lasersensoren 7 zu steuern. Ferner ist die Steuereinheit 11 eingerichtet, von den Lasersensoren 7 empfangenes Laserlicht 29, das von einem Bereich der Oberfläche 3 des Messobjekts 5 reflektiert wird, zum Erfassen der Oberflächenstruktur des Bereichs der Oberfläche 3 des Messobjekts 5 auszuwerten. Der beschriebene Prozess zum Erfassen der Oberflächenstruktur eines Bereichs der Oberfläche 3 des Messobjekts 5, der das Ausgeben von Laserlicht 23 durch die Lasersensoren 7 auf den Bereich der Oberfläche 3 des Messobjekts 5, das Empfangen von dem Bereich der Oberfläche 3 reflektierten Laserlichts 29 durch die Lasersensoren 7 und das Auswerten des empfangenen Laserlichts 29 durch die Steuereinheit 11 umfasst, wird hier auch als Scannen des Bereichs der Oberfläche 3 des Messobjekts 5 bezeichnet.

Die Steuereinheit 11 ist ferner eingerichtet, die Druckerzeugungsvorrichtung 13, das Kühlsystem 15, die Bewegung der Abdeckplatte 17 und die Antriebseinheit 19 zu steuern. Insbesondere ist die Steuereinheit 11 eingerichtet, die Antriebseinheit 19 derart zu steuern, dass das Messobjekt 5 während der Ausgabe von Laserlicht 23 auf seine Oberfläche 3 um die Längsachse 27 mindestens einmal um 360 Grad langsam (beispielsweise während etwa 80 s für eine Drehung um 360 Grad) gedreht wird, und durch Auswerten des von den Lasersensoren 7 empfangenen Laserlichts 29 eine Oberflächenstruktur der gesamten Oberfläche 3 des Messobjekts 5 zu erfassen.

Beispielsweise umfasst die Steuereinheit 11 eine speicherprogrammierbare Steuerung (SPS) zur Steuerung der Lasersensoren 7, der Druckerzeugungsvorrichtung 13, des Kühlsystems 15, der Bewegung der Abdeckplatte 17 und der Antriebseinheit 19 und einen zusätzlichen Computer zur Rohdatenübertragung der von den Lasersensoren 7 erfassten Daten und zur Auswertung dieser Daten. Alternativ kann die Steuereinheit 11 beispielsweise einen Industriecomputer aufweisen, der die Funktionen der speicherprogrammierbaren Steuerung und des zusätzlichen Computers in einem Gerät erfüllt.

Für die elektrischen Verbindungen der Steuereinheit 11 mit den Lasersensoren 7 weist der Sensorträger 9 beispielsweise wenigstens eine Steckverbindung auf, über die die Steuereinheit 11 mit wenigstens einem Lasersensor 7 verbindbar ist.

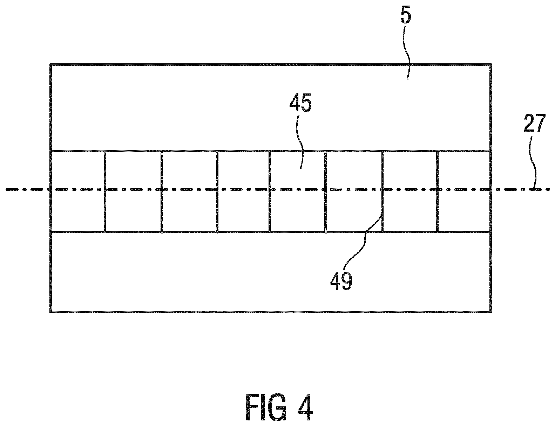

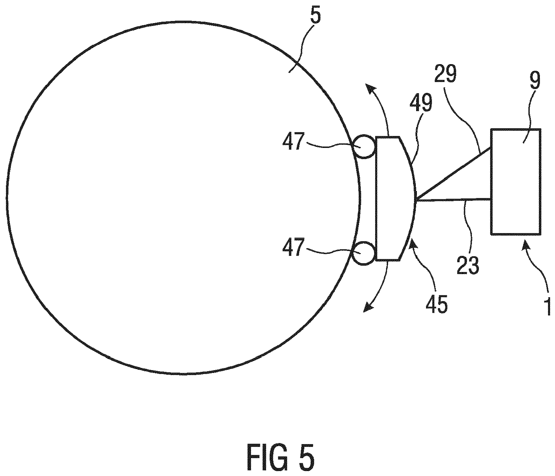

**Figur 4** (FIG 4) und **Figur 5** (FIG 5) illustrieren eine Kalibrierung der Sensoreinheit 1. Zum Kalibrieren der Sensoreinheit 1 wird an dem Messobjekt 5 ein Kalibrierobjekt 45 angeordnet, das sich entlang der gesamten Länge des Messobjekts 5 erstreckt. In dem in den Figuren 4 und 5 dargestellten Beispiel weist das Kalibrierobjekt 45 ein auf zwei zueinander parallelen zylindrisch ausgebildeten Stahlstäben 47 montiertes Zahnprofil mit in Umfangsrichtung des Messobjekts 5 abgerundeten Kanten 49 auf, so dass die Kanten 49 überall denselben Abstand von der Oberfläche 3 des Messobjekts 5 aufweisen. Figur 4 zeigt das an dem Messobjekt 5 angeordnete Kalibrierobjekt 45 in einer Draufsicht und Figur 5 zeigt das Kalibrierobjekt 45 und dessen Anordnung an dem Messobjekt 5 relativ zu der Sensoreinheit 1 in einer Seitenansicht. Durch die Stahlstäbe 47 zentriert sich das Kalibrierobjekt 45 von selbst auf der Oberfläche 3 des Messobjekts 5. Eine leichte Verkippung des Kalibrierobjekts 45 entlang einer der in Figur 5 gebogen dargestellten Pfeile ist unproblematisch, da die Kanten 49 überall denselben Abstand von der Oberfläche 3 des Messobjekts 5 aufweisen.

Die Kalibrierung wird mittels einer von der Steuereinheit 11 ausgeführten Auswertesoftware durchgeführt, der die genauen Abmessungen und das Profil des Kalibrierobjekts 45 sowie die Positionen der einzelnen Lasersensoren 7 zueinander am Sensorträger 9 und die Ausrichtung und Form der von den Lasersensoren 7 ausgegebenen Laserlichtbündel 23 bekannt sind. Zum Kalibrieren der Sensoreinheit 1 wird ein Bereich der Oberfläche des Kalibrierobjekts 45 mit der Sensoreinheit 1 gescannt. Anschließend wird das dabei gemessene Profil des Kalibrierobjekts 45 rechnerisch von der Auswertesoftware mit dem bekannten tatsächlichen Profil des Kalibrierobjekts 45 abgeglichen. Durch diesen Abgleich wird die Auswertesoftware in die Lage versetzt, das Profil des Kalibrierobjekts 45 in einem absoluten Koordinatensystem zu verorten, und zwar sowohl die Abmessungen des Kalibrierobjekts 45 als auch seine räumliche Orientierung in dem Koordinatensystem. Somit "sieht" die Sensoreinheit 1 nach dem Entfernen des Kalibrierobjekts 45 auch einen Bereich der Oberfläche 3 des Messobjekts 5 in dem absoluten Koordinatensystem und kann die Oberflächenstruktur dieses Bereichs in absoluten Werten vermessen.

Figur 6 (FIG 6) zeigt eine Schnittdarstellung eines Ausführungsbeispiels eines Treibers 51 zum Zuführen eines Walzgutes zu einem Haspel in einem Walzwerk. Der Treiber 51 ist eingerichtet, die Zuführung des Walzgutes zu dem Haspel unter Verwendung zweier Treiberrollen 53, 55 zu steuern. Eine erste Treiberrolle 53 ist oberhalb der zweiten Treiberrolle 55 angeordnet und mittels eines ersten Hydraulikzylinders 57 um eine Kippachse 59 schwenkbar. Zum Durchführen des Walzgutes durch den Treiber 51 wird die erste Treiberrolle 53 aus der in Figur 6 gezeigten Stellung nach unten geschwenkt, so dass sie an dem Walzgut anliegt und das Walzgut zwischen den beiden Treiberrollen 53, 55 hindurchgeführt wird, wobei die erste Treiberrolle 53 eine Oberseite des Walzgutes kontaktiert und die zweite Treiberrolle 55 eine Unterseite des Walzgutes kontaktiert. Das Walzgut wird dem Treiber 51 von links über einen Einlaufrollgang 61 zugeführt, wobei es mittels eines Einlaufleitblechs 63 gelenkt und mittels einer Führungsrolle 65 stabilisiert wird. Das Walzgut läuft aus dem Treiber 51 nach rechts heraus und zwar in Abhängigkeit von der Stellung einer Weiche 67 entweder schräg nach unten über ein Auslaufleitblech 69 oder im Wesentlichen horizontal über eine Weichenrolle 68 der Weiche 67. Die Stellung der Weiche 67 ist dabei mittels eines zweiten Hydraulikzylinders 71 veränderbar, durch den die Weiche 67 um eine Rollenachse der Weichenrolle 68 drehbar ist. Weitere Details des Treibers 51, die sich nicht auf dessen unten beschriebene Sensoreinheiten 1 beziehen, sind aus EP 2 624 977 B1 bekannt und nicht erfindungsrelevant und werden daher hier nicht näher beschrieben.

Der Treiber 1 weist für jede der beiden Treiberrollen 53, 55 eine dieser Treiberrolle 53, 55 zugeordnete erfindungsgemäße Sensoreinheit 1 auf, die anhand der Figuren 1 bis 5 beschrieben wurde und deren Messobjekt 5 die jeweilige Treiberrolle 53, 55 ist. Die der ersten Treiberrolle 53 zugeordnete Sensoreinheit 1 ist mithin eingerichtet, eine Oberflächenstruktur einer Oberfläche 54 der ersten Treiberrolle 53 zu erfassen. Die der zweiten Treiberrolle 55 zugeordnete Sensoreinheit 1 ist eingerichtet, eine Oberflächenstruktur einer Oberfläche 56 der zweiten Treiberrolle 55 zu erfassen. Die Sensorachse 21 der der ersten Treiberrolle 53 zugeordneten Sensoreinheit 1 ist parallel zu einer Längsachse 58 der ersten Treiberrolle 53 ausgerichtet, die eine Drehachse der ersten Treiberrolle 53 ist. Die Sensorachse 21 der der zweiten Treiberrolle 55 zugeordneten Sensoreinheit 1 ist parallel zu einer Längsachse 60 der zweiten Treiberrolle 55 ausgerichtet, die eine Drehachse der zweiten Treiberrolle 55 ist. Die Lasersensoren 7 jeder Sensoreinheit 1 sind eingerichtet, Laserlichtbündel 23 auf die Oberfläche 54, 56 derjenigen Treiberrolle 53, 55 auszugeben, der die Sensoreinheit 1 zugeordnet ist. Ferner ist jede Sensoreinheit 1 in einem Abstand von derjenigen Treiberrolle 53, 55, der sie zugeordnet ist, angeordnet, der es ermöglicht, dass die von den Lasersensoren 7 der Sensoreinheit 1 ausgegebenen Laserlichtbündel 23 zusammen einen Bereich der Oberfläche 54, 56 dieser Treiberrolle 53, 55 bestrahlen, der sich über die gesamte Länge der Treiberrolle 53, 55 erstreckt. Der Abstand der Längsachse 58, 60 einer Treiberrolle 53, 55 von den Lasersensoren 7 der ihr zugeordneten Sensoreinheit 1 liegt dabei beispielsweise in einem Bereich von 400 mm bis 450 mm. Dieser Abstand ist in Figur 6 für die beiden Treiberrollen 53, 55 jeweils durch eine gestrichelt dargestellte Kreislinie 70 kenntlich gemacht, die um die Drehachse der jeweiligen Treiberrolle 53, 55 herum verläuft.

Die Sensoreinheit 1 für die erste Treiberrolle 53 wird beim Schwenken der ersten Treiberrolle 53 nach unten nicht mitgeschwenkt, sondern verbleibt in der in Figur 6 gezeigten Position.

Jede der beiden Sensoreinheiten 1 ist ausbaubar in dem Treiber 51 angeordnet. Dabei ist die Sensoreinheit 1 für die erste Treiberrolle 53 dem Treiber 51 beispielsweise mit einer Hebevorrichtung entnehmbar. Die Sensoreinheit 1 für die zweite Treiberrolle 55 ist verschiebbar (mit einer entsprechenden Arretierungsmöglichkeit) in dem Treiber 51 angeordnet, so dass sie durch eine Zugangsöffnung 73 in einem Rahmenteil 75 des Treibers 51 aus dem Treiber 51 herausführbar ist.

Die Sensoreinheiten 1 sind ferner eingerichtet, eine Oberflächenstruktur der Oberfläche 54, 56 der jeweiligen Treiberrolle 53, 55 nur zu erfassen, wenn kein Walzgut durch den Treiber 51 geführt wird. Beispielsweise erfolgt ein Scannen der Oberflächen 54, 56 der Treiberrollen 53, 55 mittels der Sensoreinheiten 1 in Walzpausen und/oder zumindest einmal täglich, wenn gerade kein Walzgut durch den Treiber 51 geführt wird. Für ein Scannen der Oberflächen 54, 56 der Treiberrollen 53, 55 werden diese in eine langsame Rotation um ihre Längsachsen 58, 60 versetzt und wenigstens einmal um 360 Grad gedreht, um ein Scannen der gesamten Oberflächen 54, 56 der Treiberrollen 53, 55 zu erreichen. Beispielsweise beträgt dabei die Dauer einer Drehung jeder Treiberrolle 53, 55 um 360 Grad etwa 80 s. Die Drehung der Treiberrolle 53, 55 wird dabei von der Steuereinheit 11 der Sensoreinheit 1 gesteuert, indem die Steuereinheit 11 einer Antriebseinheit 19 für die Treiberrollen 53, 55 entsprechende Signale übermittelt. Wenn ein Walzgut durch den Treiber geführt wird, werden die Lasersensoren 7 der Sensoreinheiten 1 nicht aktiviert und die Abdeckplatten 17 der Sensoreinheiten 1 werden vorzugsweise jeweils in ihre erste Endstellung bewegt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Sensoreinheit
- 3: Oberfläche eines Messobjekts
- 5: Messobjekt
- 7: Lasersensor
- 9: Sensorträger
- 11: Steuereinheit
- 13: Druckerzeugungsvorrichtung
- 15: Kühlsystem
- 17: Abdeckplatte
- 19: Antriebseinheit
- 21: Sensorachse
- 23: Laserlichtbündel
- 25: Hauptausgaberichtung
- 27: Längsachse eines Messobjekts
- 29: reflektiertes Laserlicht
- 31: Gehäuse
- 33: Sichtfenster
- 35: Kühlkörper
- 37: Kühlleitung
- 39: Zulauf
- 41: Ablauf
- 43: Schwenkachse
- 45: Kalibrierobjekt
- 47: Stahlstab
- 49: Kante
- 51: Treiber
- 53: erste Treiberrolle
- 54: Oberfläche der ersten Treiberrolle
- 55: zweite Treiberrolle
- 56: Oberfläche der zweiten Treiberrolle
- 57: erster Hydraulikzylinder
- 58: Längsachse der ersten Treiberrolle
- 59: Kippachse
- 60: Längsachse der zweiten Treiberrolle
- 61: Einlaufrollgang
- 63: Einlaufleitblech
- 65: Führungsrolle
- 67: Weiche
- 68: Weichenrolle
- 69: Auslaufleitblech
- 70: Kreislinie
- 71: zweiter Hydraulikzylinder
- 73: Zugangsöffnung
- 75: Rahmenteil

## Patentansprüche

1. Sensoreinheit (1) zum Erfassen einer Oberflächenstruktur einer Oberfläche (3, 54, 56) eines Messobjekts (5, 53, 55), die Sensoreinheit (1) umfassend
- einen Sensorträger (9),
- mehrere Lasersensoren (7), die entlang einer Sensorachse (21) nebeneinander angeordnet und jeweils fest mit dem Sensorträger (9) verbunden sind, wobei
- jeder Lasersensor (7) als ein Laser-Linien-Triangulationssensor ausgebildet ist, der eingerichtet ist, ein divergentes Laserlichtbündel (23), das sich um eine Hauptausgaberichtung (25) des Lasersensors (7) fächerartig von dem Lasersensor (7) ausgehend weitet, auszugeben und Laserlicht (29) zu empfangen, wobei
- die Hauptausgaberichtungen (25) aller Lasersensoren (7) übereinstimmen und
- die Laserlichtbündel (23) aller Lasersensoren (7) in einer Ebene konzentriert sind.

2. Sensoreinheit (1) nach Anspruch 1, wobei der Sensorträger (9) ein Gehäuse (31) aufweist, das alle Lasersensoren (7) umgibt.

3. Sensoreinheit (1) nach Anspruch 2, wobei das Gehäuse (31) für jeden Lasersensor (7) ein Sichtfenster (33) aufweist, durch das Licht von dem Lasersensor (7) ausgegeben und empfangen werden kann.

4. Sensoreinheit (1) nach Anspruch 2 oder 3 mit einer Druckerzeugungsvorrichtung (13), die eingerichtet ist, in dem Gehäuse (31) einen Überdruck zu erzeugen.

5. Sensoreinheit (1) nach einem der vorhergehenden Ansprüche mit einem Kühlsystem (15), das zum Kühlen der Lasersensoren (7) eingerichtet ist.

6. Sensoreinheit (1) nach Anspruch 5, wobei das Kühlsystem (15) für jeden Lasersensor (7) wenigstens einen Kühlkörper (35) aufweist, der mit dem Lasersensor (7) in Kontakt steht und zum Durchleiten einer Kühlflüssigkeit ausgebildet ist, und wobei das Kühlsystem (15) Kühlleitungen (37) aufweist, durch die alle Kühlkörper (35) mit der Kühlflüssigkeit versorgbar sind.

7. Sensoreinheit (1) nach einem der vorhergehenden Ansprüche mit einer Abdeckplatte (17), die zwischen einer ersten Endstellung, in der die Abdeckplatte (17) die Ausgabe und den Empfang von Licht durch die Lasersensoren (7) verhindert, und einer zweiten Endstellung, in der die Abdeckplatte (17) die Ausgabe und den Empfang von Licht durch die Lasersensoren (7) ermöglicht, bewegbar ist.

8. Sensoreinheit (1) nach einem der vorhergehenden Ansprüche mit einer Steuereinheit (11), die eingerichtet ist, von den Lasersensoren (7) empfangenes Laserlicht (29), das von einem Bereich der Oberfläche (3, 54, 56) des Messobjekts (5, 53, 55) reflektiert wird, auf den von den Lasersensoren (7) Laserlicht (23) ausgegeben wird, zum Erfassen der Oberflächenstruktur des Bereichs der Oberfläche (3, 54, 56) des Messobjekts (5, 53, 55) auszuwerten.

9. Verfahren zum Betreiben einer gemäß einem der vorhergehenden Ansprüche ausgebildeten Sensoreinheit (1), wobei die Sensoreinheit (1) relativ zu dem Messobjekt (5, 53, 55) derart angeordnet wird, dass mehrere von den Lasersensoren (7) ausgegebene Laserlichtbündel (23) zusammen einen zusammenhängenden Bereich der Oberfläche (3, 54, 56) des Messobjekts (5, 53, 55) bestrahlen, und wobei mit der Sensoreinheit (1) durch Auswerten von den Lasersensoren (7) empfangenen Laserlichts (29), das von der Oberfläche (3, 54, 56) des Messobjekts (5, 53, 55) reflektiert wird, die Oberflächenstruktur des mit Laserlicht (23) bestrahlten Bereichs der Oberfläche (3, 54, 56) des Messobjekts (5, 53, 55) erfasst wird.

10. Verfahren nach Anspruch 9, wobei die Sensorachse (21) der Sensoreinheit (1) zumindest annähernd parallel zu einer Längsachse (27, 58, 60) des Messobjekts (5, 53, 55) ausgerichtet wird und das Messobjekt (5, 53, 55) während der Ausgabe des Laserlichts (23) auf seine Oberfläche (3, 54, 56) um die Längsachse (27, 58, 60) des Messobjekts (5, 53, 55) mindestens einmal um 360 Grad gedreht wird.

11. Verfahren nach Anspruch 9 oder 10, wobei zum Kalibrieren der Sensoreinheit (1) an dem Messobjekt (5, 53, 55) ein Kalibrierobjekt (45) angeordnet wird, das eine Oberfläche mit einer bekannten Oberflächenstruktur aufweist, von den Lasersensoren (7) der Sensoreinheit (1) Laserlichtbündel (23) auf die Oberfläche des Kalibrierobjekts ausgegeben werden und die Sensoreinheit (1) derart kalibriert wird, dass die von ihr durch Auswerten des von den Lasersensoren (7) empfangenen Laserlichts (29), das von der Oberfläche des Kalibrierobjekts (45) reflektiert wird, ermittelte Oberflächenstruktur mit der bekannten Oberflächenstruktur der Oberfläche des Kalibrierobjekts (45) übereinstimmt.

12. Treiber (51) für ein zum Walzen eines Walzgutes eingerichtetes Walzwerk, das einen zum Aufwickeln des Walzgutes eingerichteten Haspel aufweist, wobei der Treiber (51) eingerichtet ist, die Zuführung des Walzgutes zu dem Haspel unter Verwendung einer das Walzgut kontaktierenden Treiberrolle (53, 55) zu steuern, und wobei der Treiber (51) eine gemäß einem der Ansprüche 1 bis 8 ausgebildete Sensoreinheit (1) aufweist, die eingerichtet ist, eine Oberflächenstruktur einer Oberfläche (54, 56) der Treiberrolle (53, 55) zu erfassen, wobei die Lasersensoren (7) der Sensoreinheit (1) eingerichtet sind, Laserlichtbündel (23) auf eine Oberfläche (54, 56) der Treiberrolle (53, 55) auszugeben.

13. Treiber (51) nach Anspruch 12, wobei die Sensoreinheit (1) in einem Abstand von der Treiberrolle (53, 55) angeordnet ist, der es ermöglicht, dass mehrere von den Lasersensoren (7) ausgegebene Laserlichtbündel (23) zusammen einen zusammenhängenden Bereich der Oberfläche (54, 56) der Treiberrolle (53, 55) bestrahlen.

14. Treiber (51) nach Anspruch 12 oder 13, wobei die Sensoreinheit (1) ausbaubar in dem Treiber (51) angeordnet ist, so dass die Sensoreinheit (1) im Fall, dass die Treiberrolle (53, 55) beim Durchführen des Walzgutes durch den Treiber (51) oberhalb des Walzgutes angeordnet ist, dem Treiber (51) mit einer Hebevorrichtung entnehmbar ist und im Fall, dass die Treiberrolle (53, 55) beim Durchführen des Walzgutes durch den Treiber (51) unterhalb des Walzgutes angeordnet ist, zum Ausbau verschiebbar in dem Treiber (51) angeordnet ist, so dass die Sensoreinheit (1) durch ein Verschieben aus dem Treiber (51) herausführbar ist.

15. Verfahren zum Betreiben eines gemäß einem der Ansprüche 12 bis 14 ausgebildeten Treibers (51), wobei eine Oberflächenstruktur der Oberfläche (54, 56) der Treiberrolle (53, 55) mittels der Sensoreinheit (1) nur zu Zeiten erfasst wird, zu denen kein Walzgut durch den Treiber (51) geführt wird.
